Europäisches Patentamt

European Patent Office

Office européen des brevets

(19)

(11) Publication number: **0 082 459**
**B1**

(12) **EUROPEAN PATENT SPECIFICATION**

(45) Date of publication of patent specification: **15.10.86**

(51) Int. Cl.⁴: **A 23 L 1/22, B 01 J 13/02**

(21) Application number: **82111559.9**

(22) Date of filing: **13.12.82**

(54) **Preparation of flavorant capsules.**

(30) Priority: **21.12.81 US 333167**

(43) Date of publication of application:
**29.06.83 Bulletin 83/26**

(45) Publication of the grant of the patent:
**15.10.86 Bulletin 86/42**

(84) Designated Contracting States:
**AT BE CH DE FR GB IT LI NL SE**

(56) References cited:
**US-A-3 819 838**
**US-A-3 985 913**

(73) Proprietor: **SOCIETE DES PRODUITS NESTLE S.A.**
**Case postale 353**
**CH-1800 Vevey (CH)**

(72) Inventor: **Anderson, Charles Hal**
**708 Grove Street**
**Marysville Ohio 43040 (US)**
Inventor: **Nickerson, Winston R.**
**17225 Waldo Road**
**Marysville Ohio 43040 (US)**
Inventor: **Liu, Richard Tien-Szu**
**6855 Downs Street**
**Worthington Ohio 43085 (US)**
Inventor: **Belville, Leonard E.**
**2402 Hyatts Road**
**Delaware Ohio 43015 (US)**

Courier Press, Leamington Spa, England.

## Description

### 1. Field of the invention

This invention pertains to the field of food flavorant capsules having a long shelf-life. More particularly, the present invention is concerned with the preparation of capsules in which there are contained aromatic and/or flavorant components of a food material, which components are encapsulated before the possible loss or deterioration of these components, retained without degradation for a relatively long period of time and subsequently released when desired, usually just prior to consumption of the ultimate product in which these capsules are contained.

### 2. Description of related art

In the preparation of various food products, for example, instant foods such as instant coffee, instant soups, instant lunches, powdered desserts, etc., the desirability of retaining the flavor and/or aromatic constituents of these foods for a considerable length of time without their loss or deterioration until the food produce is consumed has long been recognized.

Thus, essential oils, both cold pressed and concentrated, such as those of lemon, orange, lime, etc., are widely used as flavoring and scenting materials in the preparation of various consumer products. However, due to the extreme sensitivity of these oils to the action of heat, light, air and moisture, it has been very difficult to preserve the fresh fruit aroma and flavor of these essential oils when present in various consumer products.

Similarly, other natural and synthetic flavors which consist of various combinations of alcohols, aldehydes, ketones, esters, etc., are liquids which are highly volatile and are also extremely sensitive to oxidation by atmospheric oxygen. Due to the aforementioned volatility, many of these extracts lose some of their original flavor or aroma or both upon storage alone or when employed in a consumer product. Moreover, because of the liquid nature of these flavoring materials, they also do not readily lend themselves for combination with solids or powders.

In the search for a way to retain and store such flavor and/or aromatic principles without deterioration and yet be able to easily release these principles when desired, a technique has been developed in which these principles are encapsulated in a shell of edible food material.

This technique generally involves first forming an emulsion of the flavor and/or aromatic constituents in aqueous form with an edible oil. This emulsion is then directly sprayed or dropped in a dropwise manner onto an agitated bed of a powdered edible material which material forms the walls or shell of the capsules. After agitation, capsules are collected having a hardened shell of edible material and a core comprised of a droplet of edible oil containing flavor and/or aromatic constituents.

The capsules produced by the above technique may be employed in products where the presence of oil is desirable such as in instant soups, instant lunches, etc. These capsules can effectively maintain their integrity and retention of the encapsulated material for as long as about twelve months without any apparent degradation of quality. However, at longer storage periods, it has been found that the oil from the core of the capsules begins to diffuse and leach through the walls and eventually causes a general deterioration of these capsules.

### Summary of the invention

Applicants have discovered a process for producing flavorant capsules which avoids the disadvantage associated with the encapsulation technique discussed above.

In particular, the process of the present invention employs an emulsion for the preparation of the flavorant capsules which is either sprayed or dropped onto agitated powdered edible material, which emulsion comprises an aqueous essence and an edible fat which at ambient temperature is in its solid state. By employing such an abible fat, applicants have found that the capsules produced in accordance with the present invention have a substantially solid core of fat surrounded by a hardened shell of edible material.

The presence of this solid core, comprised of solid fat containing flavor and/or aromatic constituents, and the formation of thick, strong capsule walls, enables the capsules of the present invention to maintain their integrity and quality for considerably greater amounts of time than that associated with the technique described above where a liquid oil is employed. Generally, the capsules prepared in accordance with the present invention have a shelf-life of about two years.

The process for preparing the flavorant capsules of the present invention which have a relatively long shelf-life comprises first forming a stable emulsion of an edible fat which at approximately ambient temperature is in its solid state and an aqueous essence. The emulsion is formed at a temperature above the melting point of the fat. This emulsion is then directly sprayed or dropped in a dropwise manner onto an agitated free-flowing, water-soluble powdered edible protein material, carbohydrate material or a powdered edible material comprised of a combination of proteins and carbohydrates which material forms the walls or shell of the desired capsules. After the powdered material has been further agitated, the resultant capsules comprising a hardened shell of edible material surrounding an essentially solid core of edible fat containing flavor and/or aroma principles are collected.

The present invention accordingly provides a simple and efficient process for preparing flavorant capsules having a desirably long shelf-life.

## Detailed description of the invention

The initial step in the encapsulation procedure of the present invention is the preparation of a stable emulsion.

The emulsion is prepared by combining an edible fat which at ambient temperature is in its solid state with an aqueous essence. Generally, the flavor and/or aromatic principles to be encapsulated and protected from the environment will be introduced into the emulsion as part of the aqueous essence. There will be times though when the material to be protected from degradation and physical loss will be the edible fat itself, e.g., chicken fat. However, inasmuch as the presence of water is necessary for the formation of a satisfactory capsule shell, water or, if desired, water containing additional flavorants or aromatics is added to such edible fat to form an emulsion. Accordingly, the term "aqueous essence" as it is employed throughout the present Specification may simply be water or water (or a suitable juice) combined with natural or artificial flavorants and/or aromatics.

More particularly, the aqueous essence of the present invention may comprise flavorants and/or aromatics derived from fruit, meat, seafood, spices, vegetables, etc. These flavor and/or aromatic principles may be natural or artificial and may include oil of lemon, oil of orange, oil of lime, natural fruit flavors such as strawberry, raspberry, cherry, etc., or a synthetic flavor such as oil of wintergreen, ethyl acetate, ethyl malate, amyl acetate, etc. Distillates of tea, coffee, chocolate, etc., may also be employed. The flavor and/or aromatic principles, both natural and/or artificial, of chicken, shrimp, fish, ham, lobster, soup greens, leek onions, carrots bacon, roast beef, etc., are also all applicable in the process of the present invention. Where a particular flavorant and/or aromatic principle is not aqueous in nature, water or a suitable juice is added to the flavorant in order to produce the aqueous essence.

The edible fat that is employed in the process of the presently claimed invention may be obtained from a variety of different sources. Such fats include, but are not limited to, animal fats such as chicken fat, lard, butter, fat, beef tallow and the like; vegetable fats such as cocoa butter, coconut butter and the like; and hydrogenated vegetable and animal oils prepared from, for example, coffee oil, corn oil, cottonseed oil, safflower oil, peanut oil, olive oil, soybean oil, linseed oil, sesame seed oil, butter oil, oils derived from fowl, beef, pork, fish and the like, etc. These fats may be employed alone or in combination with one another. Generally, these fats will have a melting point of from about 25°C to 55°C. Preferably, the melting point is in the range of from about 30°C to 40°C. The employment of a particular fat having a specific melting point will generally be dictated by the specific end use intended for the capsules employing this fat.

The first criterion in the preparation of the stable emulsion is the proportion of the edible fat to the aqueous essence that is utilized, realizing that a higher fat content and a correspondingly lower aqueous essence content will, of course, limit the amount of flavorant and/or aromatic principles in the capsule (assuming that such principles are derived from the aqueous component of the emulsion) and that a lower fat content approaches the proportion at which the emulsion becomes more difficult to prepare.

In practice, emulsions with fat contents as high as 80% and as low as 25% by weight are suitable, preferably 50% or below. Such emulsions may be pressurized and/or sprayed without breakdown. If it is desirable to employ an amount of fat which is less than 30% by weight, it is then frequently necessary to include emulsifiers and/or stabilizers which are well known to those skilled in the art. With the employment of emulsifiers, an emulsion can be prepared having as little fat as 25% by weight. Emulsifiers such as monoglycerides, diglycerides, polysorbates, etc., may be employed. The selection of particular emulsifiers will generally depend upon the composition of the core material, particularly, the type of fat employed, the HLB (hydrophiliclipophilic balance) value of the fat, and the type of emulsions desired, i.e., an oil-in-water or a water-in-oil emulsion. Generally, a combination of two or more types of emulsifiers is employed. The emulsifiers may be employed in an amount of up to 10% by weight based on the weight of the fat present.

The temperature is another important factor in the preparation of the stable emulsion. As the temperature rises, the emulsion becomes less stable. Accordingly, during the preparation of the emulsion, the initial temperature must be such so as to be above the melting point of the particular fat(s) employed so as to liquify the fat to aid in the preparation of the emulsion. The temperature employed should not be any higher than necessary to melt the fat for excessively high temperatures may cause the loss and/or degradation of the flavor or aromatic principles. The melting of the fat can be accomplished by actually melting the fat alone and then adding the aqueous essence to it which is then blended to form the emulsion or, alternatively, hot water may be added to the solid fat and then blended to form an initial emulsion to which flavor and/or aromatic consituents are subsequently added. Once the emulsion has been formed, it is desirable, but not essential, that the emulsion be cooled to a temperature in the range of from 20°C to 40°C, and preferably, to ambient temperature (around 20°C) so as to prevent the possible loss of volatiles. If the emulsion is not immediately employed in the next step of the process, but instead, is stored for a period of time, the emulsion should be stored at the temperature conditions discussed above, i.e., 20°C—40°C, and preferably 20°C. Although these temperatures may be below the melting point of some of the fats employed, it is noted that the emulsion nevertheless remains stable.

The stability of the emulsion can be determined by placing the emulsion to be tested in a 100 milliliter graduated cylinder and observing the amount of break in the emulsion after a 24 hour period at ambient temperature. The stability is reported as either the percentage of fat that has separated from the emulsion and is present at the top or the percentage of water that is present at the bottom. If no fat or water is separated, the amount of local breakdown, or as it is commonly known "checking" is recorded. Generally, an emulsion can be considered stable if the percentage of fat at the top or the percentage of water at the bottom is no more than 4% to 10%.

Once the stable emulsion is prepared, it is then ready to be employed in the next step of the process which involves adding the emulsion to powdered edible protein material, powdered edible carbohydrate material or powdered edible material comprised of a combination of proteins and carbohydrates. This powdered edible material eventually becomes the hardened walls or shell of the capsules that are produced in the present invention. In order to obtain capsules having desirably hardened, continuous impervious shells, the wall material that is employed should possess a number of specific characteristics. Firstly, the wall material should be able to pass through at least a 250 μm screen (60 U.S. Standard Mesh). More finely powdered wall material may also be employed. Generally, the dimensions of the wall material powder particles will range from 60 μm (230 U.S. Standard Mesh) to 150 μm (100 U.S. Standard Mesh).

Secondly, in addition to being finely powdered, the particles should also be advantageously irregular in shape. Thus, material that has been spray dried or which is inherently spherical, is not desirable and should first be ground to obtain irregularly shaped particles. Such particles provide more contact points, i.e., greater surface area for contact with the emulsion that is added which correspondingly aids in the development of good capsule formation. Thirdly, the wall material should also be relatively dry to be able to absorb moisture from the emulsion that is added to it which is required in order to produce the shell from the powdered material. Generally, the moisture content is preferably in the range of from about 1.5% to 8% by weight and more preferably, less than 3% by weight.

In addition, the wall material should also be able to readily dissolve in water. This characteristic is important not only for enabling the capsule to easily release the encapsulated flavor and/or aromatic principles but is also important in actually forming the capsule itself.

Furthermore, the wall material should also be free flowing and able to be easily agitated without lumping or sticking.

Lastly, the wall material should also desirably have the property, after being wetted and dried, of forming a glassy-like structure thereby providing an essentially impervious shell about the core material.

Generally, the wall materials that may be employed include edible protein material, edible carbohydrate material or an edible material comprised of a combination of proteins and carbohydrates or combinations of all these materials. Typically, such materials may include instant coffee solids, instant tea solids, instant chicory, tomato solids, corn syrup solids, modified food starch, malto dextrin, corn dextrin, enzymatically hydrolyzed cereals, gums, water soluble proteins such as casein, whey proteins, etc., applicable water soluble solids extracted from food materials, and combinations thereof.

The emulsion may be added to the wall material by two alternative techniques in order to form the desired capsules. Thus, the emulsion may be added to the wall material by "dropping" or "spraying". Without wishing to be bound by theory, no matter which method is employed, the mechanism for forming the capsules is believed to be as follows. Once the droplet of emulsion is added to the wall material and agitated, the water from the aqueous portion of the emulsion dissolves the surrounding wall material. Upon continued agitation with or without the incorporation of additional heat, the dissolved wall material will begin to dry and form a shell. As more water is freed from the core material, a thicker and stronger shell is formed. Eventually, the remaining powdered wall material will desiccate the water from the shell of the capsule leaving a hardened shell surrounding an essentially solid core of solid fat containing the aroma and/or flavor constituents. Encapsulation is complete when the water flux ceases.

There are various factors which affect the rate of transfer of water from the emulsion into the powdered wall material. If the water transfer is too fast, the capsules that are formed are not entirely closed thereby allowing emulsion to leach through the capsules. On the other hand, if the transfer of water is too slow, this is economically undesirable and results in an unduly long curing time. Moreover, an undesirably thinner wall also results from such a slow transfer rate.

One of the factors which controls the rate of water transfer into the water material is the stability of the emulsion itself. The more stable the emulsion, the more it is able to "hold on to" the water and control the rate of water transfer. Moreover, as the water begins to enter and dissolve the surrounding wall material, the edible fat left behind begins to solidify. It is believed that the solidification of the fat also tends to slow down and control the transfer rate of the water.

An additional factor affecting the rate of transfer is the temperature at which the process is conducted. The temperature should be low enough to prevent vaporization of any volatiles that may be present in the emulsion. Generally, the specific temperature employed depends upon the nature of the particular materials being used. Ambient temperature is preferred.

Finally, the hygroscopic nature of the powdered wall material also influences the rate of water transfer from the emulsion to the wall material.

One of the methods by which capsules are formed is by "dropping" droplets of emulsion onto a bed of agitated powdered wall material. By further agitation of these droplets in the powder, capsules are formed which after separation by conventional methods may be incorporated as such into various instant foods, depending upon the composition of the particular capsule.

In a variant, the capsules are dried after the initial coating of the droplet with the powdered wall material. A heat source such as a heat lamp or a hot air fluidized bed may be used for that purpose. Alternatively, drying may be accomplished by allowing the wall material to absorb the water from the emulsion and shell at ambient temperature over a period of time, for instance a few days. This dropping technique yields rather large capsules in the order of about 2.0 to 3.5 mm which have impervious walls and contain large amounts of aromatized and/or flavored fat within their interiors. The shell thickness of these capsules is generally about 50 to 100 μm.

Smaller capsules may be prepared by spraying the emulsion of fat and aqueous essence onto a bed of agitated fine wall material. Various sizes of capsules, ranging from 420 μm to 2.0 mm, are obtained depending upon the particular spraying device employed. The shell thickness of these capsules is in the range of about 20 to 50 μm. These capsules desiccate faster than the 2.0 to 3.5 mm capsules. Typically, the curing time for this alternative embodiment is in the range of from 1 hour to overnight for the larger capsules. By spraying the emulsion onto an agitated bed of finely powdered wall material at 50°C, the capsules formed desiccate rapidly, within minutes after they have been produced.

In each of the above techniques, the curing step, during which the capsules are actually formed, involves the agitation of the powdered wall material, with or without heat, until the water flux ceases. Thus, the term "curing" as used herein means agitation of the powdered material until the water flux ceases. The curing time is primarily dependent upon the ultimate capsule size.

Generally, the ratio of the amount of emulsion added to the powdered wall material is in the range of from about 1:4 to 1:50.

If desired, a humectant such as glycerol, propylene glycol, sorbitol, mannitol, etc., may be added to the emulsion. This further aids in prolonging the shelf-life of the resultant capsules by helping to retain the moisture in the capsule walls thereby maintaining their integrity.

Each of the various alternative techniques discussed above for preparing the capsules of the present invention may be carried out in either a batch or continuous manner.

The capsules that are formed by the process of the present invention may be combined with the ultimate consumer product in any conventional manner such as by simply adding the capsules and mixing.

In the preparation of instant chicken soup, for example, capsules containing the flavor and/or aromatic constituents of chicken may be added to the instant chicken soup ingredients and then thoroughly mixed. Generally, the amount of flavorant capsules added to such an instant food product will be in the order of up to 10% by weight. The employment of capsules having an average particle size of between 600 μm and 1600 μm is preferred for this application.

In general, the amount of flavorant capsules added to a consumer product can vary from as little as .01% to as much as 10% by weight. The amount of flavorant capsules which is added to a particular product is generally dependent upon the desired level of flavor and/or aroma that is to be imparted to the food product and the flavor and/or aromatic strength of the particular capsules.

The capsules produced by the present invention comprise hardened glass-like shells of edible material surrounding a core of solid fat containing flavor and/or aromatic constituents. These capsules have a shelf-life in excess of about one to two years. During that time, an intact capsule will have essentially no aroma of its own. It is not until the capsule is contacted with water, preferably hot water so as to melt the fat, (or actually physically broken) that a large burst of aroma (with or without flavorant) is given off. Depending upon the particular wall material employed, the size of the capsule and the temperature of the water, the dissolution of the capsules may take anywhere in the range of from about 10 seconds to about 2 minutes. While encapsulated, the flavor and/or aromatic constituents are effectively protected from the environment against deteriorating influences and are not released until desired.

Having described the basic concepts of the invention, the following Examples are set forth to illustrate the same. They are not, however, to be construed as limiting the invention in any manner. In the Examples, ratios and percentages are given by weight.

Example I

A core formulation is prepared employing an edible fat/aqueous essence rate of 1:3 having the following formulation:

| | |
|---|---|
| Chicken fat (M.P. 27°—35°C) | 11 grams |
| Chicken flavor | 30 grams |
| Emulsifiers | 1.2 grams |
| Water | 3 grams |

An emulsion is prepared from the core material by first combining the emulsifiers and water which is at a temperature of 65°C in a Waring blender in which the added components are blended for approximately 2 1/2 minutes. The chicken fat, having a melting point range of about 27°—35°C, is then added to the mixture and the resultant mixture is blended for an additional 2 1/2 minutes.

The mixture is then cooled from a temperature of about 50°C to a temperature of about 20°C by placing the entire blender in a cold-water bath. Finally, the chicken flavored essence is added to the mixture and the mixture is blended for an additional 30 seconds. The emulsion is stable at 25°C for 96 hours.

The wall material consists of 45% Frodex 24 (modified corn syrup solids), 45% Frodex 42 (modified corn syrup solids) and 10% Filmset (gum free starch). This wall material mixture has a total moisture content of 3.0% by weight and is ground such that it is able to pass through a 100 μm screen (140 U.S. Mesh). 500 grams of this powdered wall material are employed.

The capsules are prepared by allowing droplets of the emulsion to fall from a 10 ml syringe on to the surface of the powdered wall material which has been placed in a rotating jar at an emulsion/powder ratio of 1:5 by weight. By the continuing agitation of these droplets in the powder, capsules are formed which are cured by allowing the powdered wall material containing the emulsion droplets to tumble for an additional 16 hours at room temperature. The resulting capsules are then separated from the powdered material by sifting.

92 grams of capsules are recovered having an average particle size of about 1 to 2 mm.

A number of the capsules are cut exposing a core of solid fat surrounded by a continuous, spherical shell of hardened wall material. These capsules remain intact with no visible deterioration of quality for approximately 1 1/2 years.

The capsules are incorporated into an instant chicken lunch product in an amount of 5% weight where upon the addition of hot water, the capsules dissolve causing a burst of chicken aroma and flavor to be released.

Example II
(Comparison Example)
The procedure set forth in this example is not in accordance with the process of the presently claimed invention. Thus, in this example, Example I is repeated with the only exception being that the core formulation is modified such that the chicken fat is replaced with corn oil having a melting point of 18.3°C. Each of the remaining ingredients and steps is carried out in a manner identical to that set forth in Example I.

The capsules produced in this example have a liquid core instead of a solid core and after about 7 months of storage at ambient temperature, begin to deteriorate as oil starts to leach through the capsule walls and becomes visible on the surface of the capsule.

Example III
The procedure of Example I is repeated with the only exception being that the core formulation is modified such that partially hydrogenated coconut oil having a melting point of 43°C is employed in a fat/water ratio of 1:1.5 in the following formulation:

| | |
|---|---|
| Hydrogenated Coconut Oil (M.P. 43°C) | 100 grams |
| Tomato Essence | 100 grams |
| Water | 50 grams |
| Emulsifiers | 10 grams |

The emulsion and the capsules are prepared in an identical manner as set forth in Example I. 98 grams of capsules are produced having an average size of approximately 1.5 mm. These capsules have a shelf-life of approximately 2 years.

5% by weight of these tomato flavored capsules are added to a dried instant tomato soup mix and remain intact and do not release their flavor and/or aroma until the tomato soup is reconstituted with hot water.

Example IV
The core emulsion employed in Example III is prepared and is then sprayed into a rotating drum containing 5 kilograms of a powdered wall material which is able to pass through a 74 μm screen (200 U.S. Standard Mesh) and comprised of 50% tomato powder, 40% Frodex 24 and 10% Nadex (modified starch). 160 grams of the emulsion is sprayed onto the mixing bed of the powdered wall material through a nozzle having an opening of $3.0 \times 10^{-5}$ cm by means of a small piston pump which provides a spraying pressure of 1.4 kg/cm².

After spraying, the rotary drum is sealed and cured by allowing the drum to continue rotating for an additional 12 hours. 200 grams of cured capsules are then separated having a particle size of approximately 800 μm. These capsules, when compared to the capsules prepared in Example III, are smaller in size and therefore contain less flavorant per gram of capsules. Accordingly, more of these capsules would have to be employed to produce a comparable flavor effect.

The capsules prepared in this example are employed in the tomato sauce for a frozen pizza product. They remain intact, without any visible degradation, for approximately 1 1/2 years.

Example V
A core formulation is prepared having the following components:

| | |
|---|---|
| Partially hydrogenated Cottonseed oil (M.P. 48°C) | 100 grams |
| Lobster essence | 100 grams |
| Water | 50 grams |

5 kilograms of BHE (100% enzyme hydrogenated wheat flower) having a moisture content of 2.5% by weight and ground such that it is able to pass through a 74 μm screen (200 U.S. Mesh) is employed as the wall material.

The emulsion is prepared by homogenizing the ingredients in a high shear mixer such as a Tekmar for approximately 2 minutes.

The capsules are prepared in a manner similar as that set forth in Example IV with the exception being that a nozzle having an opening of $2.3 \times 10^{-5}$ cm is employed. 300 grams of capsules are produced having a particle size of approximately 200 to 800 µm. The capsules so obtained have a shelf-life of over 1 year, are fully developed, round and have a shell thickness of about 20 µm. These capusles are employed in a lobster sauce and do not release their essence until hot water has been added.

Example VI

A core emulsion is prepared having a fat/water ratio of 1:2 by mixing the following constituents:

| Coconut butter | |
|---|---|
| (M.P. 32.2°C—44.4°C) | 50 grams |
| Chocolate flavored essence | 75 grams |
| Water | 25 grams |

The emulsion is prepared in a manner similar as that set forth in Exmple V. Capsules are prepared by allowing droplets of the emulsion to fall from a Pasteur pipette onto the surface of 1.0 kilogram of agitated powdered wall material having a total moisture content of 3.0% by weight and ground such that it is able to pass through a .1 mm (140 U.S. Mesh) screen and comprised of 50% cocoa powder, 40% Frodex 42 and 10% Filmset in an emulsion/powder ratio of 1:6.7 by weight. By further agitation of these droplets in the powder, capsules are formed which are dried by allowing the fine powder to desiccate the water from the emulsion and shell at room temperature over a period of several days (self-desiccation).

115 grams of capsules are obtained having a particle size of approximately 2.0 to 3.0 mm. These capsules have a thicker wall than the capsules of Example V and have a hard and glossy shell. The capsules are incorporated into an instant chocolate drink mix in an amount of 2.0% by weight. Upon the addition of water, the capsules release a burst of chocolate flavor and aroma. These capsules have a shelf-life of approximately 1 1/2 years.

Example VII

The emulsion employed in Example VI is employed in this example with 10 kilograms of Maltrin 100 (corn syrup solids) as the wall material. In this example, the emulsion, which is prepared in the same manner as set forth in Example VI, is sprayed onto the Maltrin wall material employing a nozzle having an opening of $2.3 \times 10^{-5}$ cm. The capsules are cured by sealing the rotary drum and tumbling the drum for only one hour. The curing is then completed by introducing the entire mixture of powder and partially formed capsules in a fluidized air bed to complete the curing step. The air temperature of the fluidized air bed is maintained at approximately 50°C with an air flow rate of approximately 30 meters per minute. After 10 minutes in the fluidized air bed, the capsules are removed by increasing the air flow rate to approximately 100 meters per minute such that the excess powder is blown out leaving the cured fully formed capsules behind.

These capsules, when compared to the capsules prepared in Example VI are smaller in size, have thinner capsule walls and contain less flavorant per gram of capsules.

**Claims**

1. A process for producing flavorant capsules comprising:
   (a) forming a stable emulsion of an edible fat having a melting point of from 25°C to 55°C and an aqueous essence, the emulsion being formed at a temperature above the melting point of the fat;
   (b) adding droplets of the emulsion to an agitated, free-flowing, water-soluble powdered edible protein material, carbohydrate material or a powdered edible material comprised of a combination of proteins and carbohydrates; and then
   (c) curing (i.e. agitating the powdered material until the water flux ceases) and collecting the resultant capsules.

2. The process of claim 1, wherein the emulsion is added to the powdered edible material by spraying.

3. The process of claim 1, wherein the emulsion is added to the powdered edible material by dropping.

4. The process of claim 1, wherein the melting point of the fat is from about 30°C to 40°C.

5. The process of claim 1, wherein the emulsion of edible fat and aqueous essence contains between 30% and 80% by weight of fat.

6. The process of claim 1, wherein the emulsion of edible fat and aqueous essence contains at least one emulsifier and the amount of fat present is between 25% to 80% by weight.

7. The process of claim 6, wherein the amount of emulsifier present is up to 10% by weight based on the weight of the fat.

8. The process of claim 2, wherein the capsules are in the range from about 420 µm to 2.0 mm in size.

9. The process of claim 3, wherein the capsules are in the range of from about 2.0 to 3.5 mm in size.

10. The process of claim 1, wherein the edible fat is selected from the group consisting of animal fats, vegetable fats, hydrogenated animal oils, hydrogenated vegetable oils and combinations thereof.

11. The process of claim 1, wherein the aqueous essence is selected from the group consisting of natural or artificial fruit flavors, meat flavors, seafood flavors, spice flavors, vegetable flavors and combinations thereof.

12. The process of claim 1, wherein the powdered edible material has an average particle size of from 60 µm to 150 µm.

13. The process of claim 1, wherein the powdered edible material has a moisture content of from 1.5% to 6.0% by weight.

14. The process of claim 1, wherein the emulsion contains at least one humectant.

15. Flavorant capsules comprising a hardened shell of edible protein material, carbohydrate material or a combination of protein and carbohydrate material surrounding an essentially solid core of edible fat having a melting point of from 25°C to 55°C containing a flavor and/or aroma essence.

16. The capsules of claim 15 having dimensions of from 420 µm to 3.5 mm.

## Patentansprüche

1. Verfahren zur Herstellung von Aromakapseln, umfassend:
(a) Ausbilden einer stabilen Emulsion aus einem eßbaren Fett mit einem Schmelzpunkt von 25°C bis 55°C und einer wässerigen Essenz, wobei die Emulsion bei einer über dem Schmelzpunkt des Fettes liegenden Tmperatur ausgebildet wird;
(b) Zusetzen von Tröpfchen der Emulsion zu einem in Bewegung gehaltenen, freifließenden, wasserlöslichen, pulverförmigen, eßbaren Proteinmaterial, Kohlenhydratmaterial oder einem pulverförmigen, eßbaren Material, bestehend aus einer Kombination von Proteinen und Kohlenhydraten; und hierauf
(c) Erhärten (das heißt In-Bewegung-Halten des pulverförmigen Materials bis zu einem Aufhören des Flußes von Wasser) und Gewinnen der gebildeten Kapseln.

2. Verfahren nach Anspruch 1, worin die Emulsion zu dem pulverförmigen eßbaren Material durch Sprühen zugesetzt wird.

3. Verfahren nach Anspruch 1, worin die Emulsion zu dem pulverförmigen eßbaren Material durch Zutropfen zugesetzt wird.

4. Verfahren nach Anspruch 1, worin der Schmelzpunkt des Fettes von etwa 30°C bis 40°C beträgt.

5. Verfahren nach Anspruch 1, worin die Emulsion aus eßbarem Fett und wässeriger Essenz zwischen 30 und 80 Gew.-% enthält.

6. Verfahren nach Anspruch 1, worin die Emulsion aus eßbarem Fett und wässeriger Essenz wenigstenz einen Emulgator enthält und die Menge an vorliegendem Fett zwischen 25 und 80 Gew.-% beträgt.

7. Verfahren nach Anspruch 6, worin die Menge an vorliegendem Emulgator bis zu 10 Gew.-% beträgt, bezogen auf das Gewicht des Fettes.

8. Verfahren nach Anspruch 2, worin die Kapseln eine Größe im Bereich von etwa 420 µm bis 2,5 mm aufweisen.

9. Verfahren nach Anspruch 3, worin die Kapseln eine Größe im Bereich von etwa 2,0 bis 3,5 mm aufweisen.

10. Verfahren nach Anspruch 1, worin das eßbare Fett aus der aus tierischen Fetten, pflanzlichen Fetten, hydrierten tierischen Ölen, hydrierten Pflanzenölen und Kombinationen hievon bestehenden Gruppe ausgewählt wird.

11. Verfahren nach Anspruch 1, worin die wässerige Essenz aus der aus natürlichen oder künstlichen Fruchtaromen, Fleischaromen, Meerefrüchte - Aromen, Gewürzaromen, Gemüsearomen und Kombinationen hievon bestehenden Gruppe ausgewählt wird.

12. Verfahren nach Anspruch 1, worin das pulverförmige, eßbare Material eine mittlere Teilchengröße von 60 µm bis 150 µm aufweist.

13. Verfahren nach Anspruch 1, worin das pulverförmige, eßbare Material einen Feuchtigkeitsgehalt von 1,5 bis 6,0 Gew.-% aufweist.

14. Verfahren nach Anspruch 1, worin die Emulsion wenigstens ein Feuchthaltemittel enthält.

15. Aromakapseln, bestehend aus einer erhärteten Schale aus eßbarem Proteinmaterial, Kohlenhydratmaterial oder einer Kombination aus Protein- und Kohlenhydratmaterial, die einen im wesentlichen festen Kern aus eßbarem Fett mit einem Schmelzpunkt von 25°C bis 55°C mit einem Gehalt an einer Geschmacks- und/oder Aromaessenz umgibt.

16. Die Kapseln nach Anspruch 15 mit Abmessungen von 420 µm bis 3,5 mm.

## Revendications

1. Procédé pour produire des capsules de flaveur comprenant:
(a) la formation d'une émulsion stable d'une graisse comestible ayant un point de fusion de 25°C à 55°C et d'une essence aqueuse, l'émulsion étant formée à une température supérieure au point de fusion de la graisse;
(b) l'addition de gouttelettes de l'émulsion à une matière protéinique comestible en poudre hydrosoluble, agitée, coulant librement, une matière du type glucide ou une matière comestible en poudre constituée d'une association de protéines et de glucides; puis
(c) la maturation (c'est-à-dire l'agitation de la matière en poudre jusqu'à ce que le flux d'eau cesse) et la collecte des capsules résultantes.

2. Procédé selon la revendication 1, dans lequel l'émulsion est ajoutée à la matière comestible en poudre par pulvérisation.

3. Procédé selon la revendication 1, dans lequel l'émulsion est ajoutée goutte à goutte à la matière comestible en poudre.

4. Procédé selon la revendication 1, dans lequel le point de fusion de la graisse est d'environ 30°C à 40°C.

5. Procédé selon la revendication 1, dans lequel l'émulsion de graisse comestible et d'essence aqueuse contient entre 30% et 80% en poids de graisse.

6. Procédé selon la revendication 1, dans lequel l'émulsion de graisse comestible et d'essence aqueuse contient au moins un émulsifiant et la quantité de graisse présente est comprise entre 25% et 80% en poids.

7. Procédé selon la revendication 6, dans lequel la quantité d'émulsifiant présent peut s'élever jusqu'à 10% en poids sur la base du poids de la graisse.

8. Procédé selon la revendication 2, dans lequel les capsules ont une dimension comprise entre environ 420 µm et 2,0 mm.

9. Procédé selon la revendication 3, dans lequel les capsules ont une dimension comprise entre environ 2,0 et 3,5 mm.

10. Procédé selon la revendication 1, dans lequel la graisse comestible est choisie dans le groupe comprenant des graisses animales, des graisses végétales, des huiles animales hydrogénées, des huiles végétales hydrogénées et des combinaisons de ces matières.

11. Procédé selon la revendication 1, dans lequel l'essence aqueuse est choisie dans le groupe comprenant des essences ayant des flaveurs de fruits naturels et artificiels, de viande, de poissons, crustacés et mollusques, d'épices, de légumes et des combinaisons de ces flaveurs.

12. Procédé selon la revendication 1, dans lequel la matière comestible en poudre présente une dimension moyenne de particules de 60 µm à 150 µm.

13. Procédé selon la revendication 1, dans lequel la matière comestible en poudre présente une teneur en humidité de 1,5% à 6,0% en poids.

14. Procédé selon la revendication 1, dans lequel l'émulsion contient au moins un humectant.

15. Capsules de flaveur comprenant une coque durcie en matière protéinique comestible, en matière du type glucide ou en une combinaison de matières des types protèine et glucide, entourant un noyau essentiellement solide de graisse comestible ayant un point de fusion de 25°C à 55°C, contenant une essence de flaveur et/ou d'arôme.

16. Capsules selon la revendication 15 ayant des dimensions de 420 µm à 3,5 mm.